# EUROPEAN PATENT APPLICATION

(11) **EP 4 131 158 A1**
(43) Date of publication of application: **08.02.2023**
(21) Application number: 21782012.5
(22) Date of filing: 31.03.2021
(51) Int. Cl.: G06T 7/00

(54) **DETECTION DEVICE AND IMAGE DISPLAY MODULE**

(30) Priority: 02.04.2020 JP 2020066989; 19.10.2020 JP 2020175409
(71) Applicant: Kyocera Corporation, Kyoto-shi Kyoto 612-8501 (JP)
(72) Inventor: KUSAFUKA, Kaoru, Kyoto-shi, Kyoto 612-8501 (JP); SATOU, Akinori, Kyoto-shi, Kyoto 612-8501 (JP); MURATA, Mitsuhiro, Kyoto-shi, Kyoto 612-8501 (JP)
(74) Representative: TBK
(86) International application number: PCT/JP2021/014006
(87) International publication number: WO 2021/201161

(57) **Abstract**

A detection device includes a camera and a detector. The camera captures an image of a human face. The detector detects a position of a human eye based on the captured image output from the camera by template matching.

## Description

### TECHNICAL FIELD

The present disclosure relates to a detection device and an image display module.

### BACKGROUND OF INVENTION

A known technique is described in, for example, Patent Literature 1.

### CITATION LIST

### PATENT LITERATURE

Patent Literature 1: Japanese Unexamined Patent Application Publication No. 2001-166259

### SUMMARY

In one embodiment of the present disclosure, a detection device includes a camera and a detector. The camera captures an image of a human face. The detector detects a position of a human eye based on the captured image output from the camera by template matching.

In one embodiment of the present disclosure, an image display system includes a display, a barrier, a camera, a detector, and a controller. The display displays a parallax image to be projected to two human eyes through an optical system. The barrier defines a traveling direction of image light for the parallax image to generate parallax between the two human eyes. The camera captures an image of a human face. The detector detects positions of the two human eyes based on the captured image output from the camera by template matching. The controller controls the display based on the positions of the two human eyes detected by the detector.

### BRIEF DESCRIPTION OF THE DRAWINGS

The objects, features, and advantages of the present disclosure will become more apparent from the following detailed description and the drawings.
FIG. 1 is a schematic diagram of an example movable body incorporating a detection device.
FIG. 2 is a schematic diagram describing template matching.
FIG. 3 is a schematic diagram of an example three-dimensional (3D) projection system.
FIG. 4 is a schematic diagram describing the relationship between the eyes of a driver, a display, and a barrier.
FIG. 5 is a flowchart of an example template image generation process performed by the detection device.
FIG. 6 is a flowchart of an example template matching process performed by the detection device.
FIG. 7 is a flowchart of another example template matching process performed by the detection device.
FIG. 8 is a schematic diagram of another example 3D projection system.
FIG. 9 is a flowchart of another example template matching process performed by the detection device.
FIG. 10 is a flowchart of another example template matching process performed by the detection device.

### DESCRIPTION OF EMBODIMENTS

The structure that forms the basis of the present disclosure obtains, when detecting the positions of the eyes of a user, positional data indicating the positions of the pupils using an image of the eyes of the user captured with a camera. For example, a three-dimensional (3D) display device displays an image on a display to allow the left and right eyes of the user to view the corresponding images based on the positions of the pupils indicated by the positional data (e.g., Patent Literature 1).

An embodiment of the present disclosure will now be described in detail with reference to the drawings. The drawings used herein are schematic and are not drawn to scale relative to the actual size of each component.

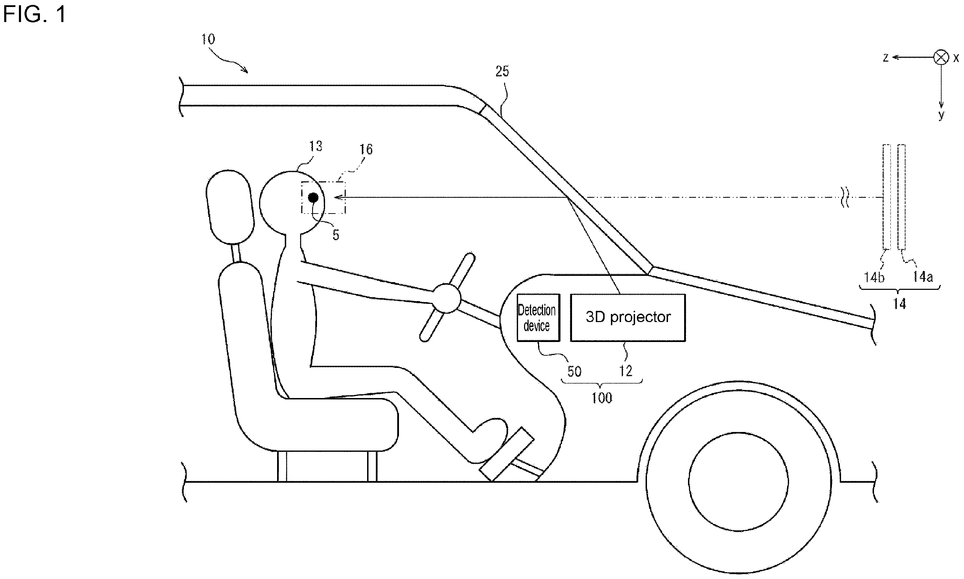

As illustrated in FIG. 1, a detection device 50 according to one embodiment of the present disclosure may be mounted on a movable body 10. The detection device 50 includes a camera 11 and a detector 15. The movable body 10 may include a 3D projection system 100. The 3D projection system 100 includes the detection device 50 and a 3D projector 12.

Examples of the movable body in one or more embodiments of the present disclosure may include a vehicle, a vessel, and an aircraft. Examples of the vehicle may include an automobile, an industrial vehicle, a railroad vehicle, a community vehicle, and a fixed-wing aircraft traveling on a runway. Examples of the automobile may include a passenger vehicle, a truck, a bus, a motorcycle, and a trolley bus. Examples of the industrial vehicle may include an industrial vehicle for agriculture and an industrial vehicle for construction. Examples of the industrial vehicle may include a forklift and a golf cart. Examples of the industrial vehicle for agriculture may include a tractor, a cultivator, a transplanter, a binder, a combine, and a lawn mower. Examples of the industrial vehicle for construction may include a bulldozer, a scraper, a power shovel, a crane vehicle, a dump truck, and a road roller. Examples of the vehicle may include man-powered vehicles. The classification of the vehicle is not limited to the above examples. Examples of the automobile may include an industrial vehicle travelling on a road. One type of vehicle may fall within multiple classes. Examples of the vessel may include a jet ski, a boat, and a tanker. Examples of the aircraft may include a fixed-wing aircraft and a rotary-wing aircraft.

In the example described below, the movable body 10 is a passenger vehicle. The movable body 10 is not limited to a passenger vehicle, but may be any of the above examples. The camera 11 may be attached to the movable body 10. The camera 11 captures an image of a driver 13 of the movable body 10. The image of the driver 13 includes a face (human face). The camera 11 may be attached at any position inside or outside the movable body 10. For example, the camera 11 may be on a dashboard in the movable body 10.

The camera 11 may be a visible light camera or an infrared camera. The camera 11 may function both as a visible light camera and an infrared camera. The camera 11 may include, for example, a charge-coupled device (CCD) image sensor or a complementary metal-oxide semiconductor (CMOS) image sensor.

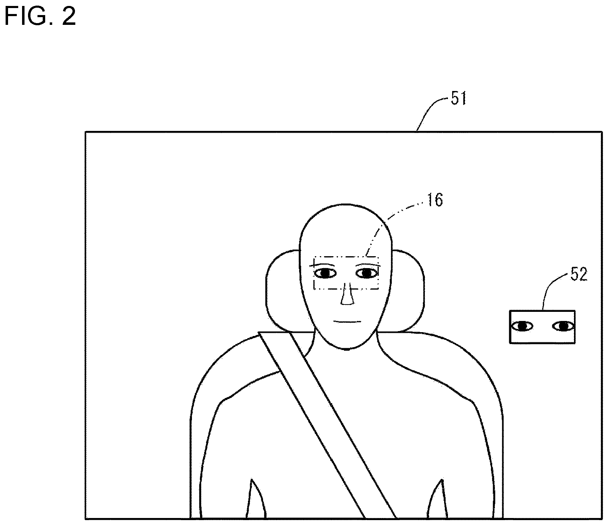

An image captured with the camera 11 is output to the detector 15. The detector 15 uses template matching to detect the position of an eye 5 of the driver 13 based on the captured image output from the camera 11. The camera 11 may output an image to the detector 15 for every frame. The detector 15 may detect the position of the eye 5 through template matching for every frame. The position of the eye 5 of the driver 13 may be the position of the pupil. Template matching is image processing of searching a target image for a position with the highest degree of matching with a template image. The detection device 50 according to an embodiment of the present disclosure uses a captured image 51 output from the camera 11 as a target image. A template image 52 includes the eye 5 of the driver 13 or a part of the face determined to have a relative positional relationship with the eye 5 of the driver 13. The template image 52 may include, as the eye 5 of the driver 13, the two eyes, the right eye alone, or the left eye alone. The facial part determined to have a relative positional relationship with the eye(s) 5 of the driver 13 may be, for example, the eyebrows or the nose. In the example of FIG. 2, the template image 52 includes the two eyes as the eye(s) 5 of the driver 13.

The structure that forms the basis of the present disclosure performs pupil position detection based on a captured image using the captured image including the pupils of the user. With a captured image that does not include pupils, the pupil positions cannot be detected. For example, the pupil positions cannot be detected based on an image of the user captured when the user's eyes are closed, such as when the user is blinking. The structure in an embodiment of the present disclosure uses template matching of searching the captured image 51 for a position with the highest degree of matching with the template image 52, and thus can search the captured image 51 for any position with the highest degree of matching using features other than the pupils in the template image 52 when the captured image 51 does not include pupils. The template image 52 is larger than the pupils. Thus, template matching involves less computation than pupil detection when each performed using the captured image 51 with the same size as the detection target. With such less computation, the detector 15 can output a detection result from template matching at a higher computation speed than a result from pupil detection.

The template image 52 may be shaped in correspondence with the shape of the captured image 51. For the captured image 51 being rectangular, the template image 52 may be rectangular. The shape of the template image 52 may be or may not be similar to the shape of the captured image 51. In the example described below, the captured image 51 and the template image 52 are rectangular as illustrated in FIG. 2.

A detection result obtained by the detection device 50 may be coordinate information indicating the pupil positions of the eyes 5 (two eyes) of the driver 13. The coordinates of the position in the captured image 51 with the highest degree of matching with the template image 52 are determined through template matching. The coordinates of the matching position resulting from template matching may, for example, correspond to the coordinates of a representative position in the template image 52. The representative position in the template image 52 may be, for example, any one of the vertexes or the center of the template image 52. The relative coordinate positional relationship between the coordinates of the pupil positions in the template image 52 and the representative position in the template image 52 may be predefined. For the coordinates of the matching position in the captured image 51 determined by template matching, the coordinates and the predefined relative positional relationship can be used to determine coordinate information about the pupil positions in the captured image 51. For the driver 13 with the eyes 5 being closed and the pupils not included in the captured image 51, for example, coordinate information about the pupil positions of the eyes 5 being open can be obtained through estimation. The detection device 50 according to an embodiment of the present disclosure can determine coordinate information about the pupil positions although the driver 13 has the eyes 5 closed by, for example, blinking, allowing successive output of coordinate information without interruption.

The detection device 50 may include, for example, a sensor. The sensor may be, for example, an ultrasonic sensor or an optical sensor. The camera 11 may detect the position of the head of the driver 13 with the sensor, and detect the positions of the eyes 5 of the driver 13 based on the position of the head. The camera 11 may detect the positions of the eyes 5 of the driver 13 as the coordinates in a 3D space using two or more sensors.

The detection device 50 may output coordinate information about the detected pupil positions of the eyes 5 to the 3D projector 12. The 3D projector 12 may control an image to be projected based on the received coordinate information. The detection device 50 may output information indicating the pupil positions of the eyes 5 to the 3D projector 12 through wired or wireless communication. Wired communication may include, for example, communication using a controller area network (CAN).

The detection device 50 may include the detector 15 that is an external device. The camera 11 may output the captured image 51 to the external detector 15. The external detector 15 may detect the pupil positions of the eyes 5 of the driver 13 by template matching based on the image output from the camera 11. The external detector 15 may output the coordinate information about the detected pupil positions of the eyes 5 to the 3D projector 12. The 3D projector 12 may control an image to be projected based on the received coordinate information. The camera 11 may output the captured image to the external detector 15 through wired or wireless communication. The external detector 15 may output the coordinate information to the 3D projector 12 through wired or wireless communication. Wired communication may include, for example, communication using a CAN.

The 3D projector 12 may be at any position inside or outside the movable body 10. For example, the 3D projector 12 may be on the dashboard in the movable body 10. The 3D projector 12 emits image light toward a windshield 25.

The windshield 25 reflects the image light emitted from the 3D projector 12. The image light reflected from the windshield 25 reaches an eye box 16. The eye box 16 is an area in a real space expected to include the eyes 5 of the driver 13 based on, for example, the body shape, posture, and changes in the posture of the driver 13. The eye box 16 may have any shape. The eye box 16 may include a planar or 3D area. The solid arrow in FIG. 1 indicates the traveling path of at least a part of the image light emitted from the 3D projector 12 to reach the eye box 16. The traveling path of the image light is also referred to as an optical path. When the eyes 5 of the driver 13 are located within the eye box 16, the driver 13 can view a virtual image 14 with the image light reaching the eye box 16. The virtual image 14 is located on an extension of the path from the windshield 25 to the eyes 5 (on a straight line drawn with a dot-dash line in the figure). The extension is directed frontward from the movable body 10. The 3D projector 12 can function as a head-up display that allows the driver 13 to view the virtual image 14. In FIG. 1, the direction in which the eyes 5 of the driver 13 are aligned corresponds to x-direction. The vertical direction corresponds to y-direction. The imaging range of the camera 11 includes the eye box 16.

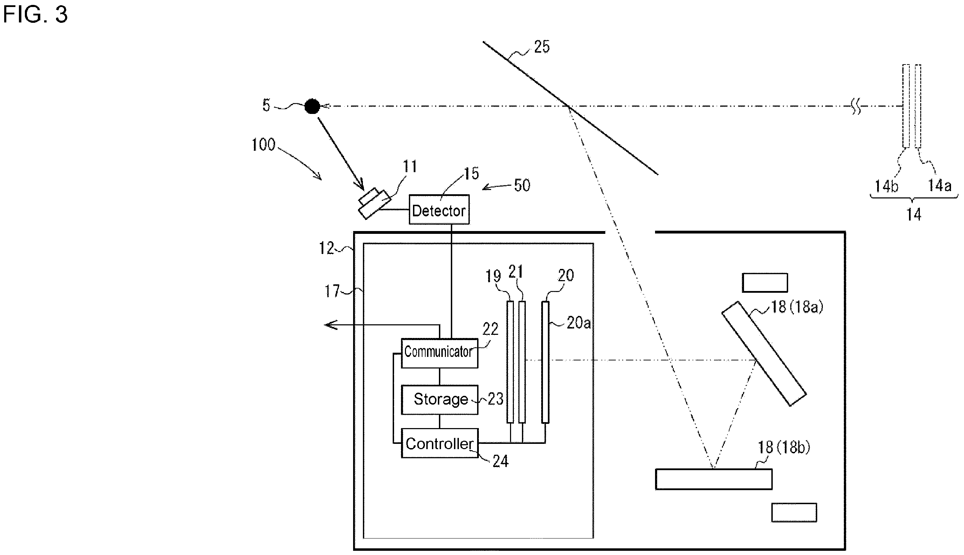

As illustrated in FIG. 3, the 3D projector 12 includes a 3D display device 17 and an optical element 18. The 3D projector 12 may also be referred to as an image display module. The 3D display device 17 may include a backlight 19, a display 20 including a display surface 20a, a barrier 21, and a controller 24. The 3D display device 17 may further include a communicator 22. The 3D display device 17 may further include a storage 23.

The optical element 18 may include a first mirror 18a and a second mirror 18b. At least one of the first mirror 18a or the second mirror 18b may have optical power. In the present embodiment, the first mirror 18a is a concave mirror having optical power. The second mirror 18b is a plane mirror. The optical element 18 may function as a magnifying optical system that magnifies an image displayed by the 3D display device 17. The arrowed dot-dash line in FIG. 3 indicates the traveling path of at least a part of image light emitted from the 3D display device 17 to be reflected from the first mirror 18a and the second mirror 18b and then exit the 3D projector 12. The image light exiting from the 3D projector 12 reaches the windshield 25, is reflected from the windshield 25, and then reaches the eyes 5 of the driver 13. Thus, the driver 13 can view the image displayed by the 3D display device 17.

The optical element 18 and the windshield 25 are designed to cause image light emitted from the 3D display device 17 to reach the eyes 5 of the driver 13. The optical element 18 and the windshield 25 may be included in an optical system. The optical system allows the image light emitted from the 3D display device 17 to travel along the optical path indicated by the dot-dash line and reach the eyes 5 of the driver 13. The optical system may control the traveling direction of image light to enlarge or reduce an image viewable to the driver 13. The optical system may control the traveling direction of image light to change the shape of the image viewable by the driver 13 based on a predetermined matrix.

The optical element 18 may have a structure different from the illustrated structure. The optical element 18 may include a concave mirror, a convex mirror, or a plane mirror. The concave mirror or the convex mirror may be at least partially spherical or aspherical. The optical element 18 may be one element or may include three or more elements, instead of two elements. The optical element 18 may include a lens instead of or in addition to a mirror. The lens may be a concave lens or a convex lens. The lens may be at least partially spherical or aspherical.

The backlight 19 is more away on the optical path of image light viewed from the driver 13 than the display 20 and the barrier 21. The backlight 19 emits light toward the barrier 21 and the display 20. At least a part of the light emitted from the backlight 19 travels along the optical path indicated by the dot-dash line and reaches the eyes 5 of the driver 13. The backlight 19 may include a light-emitting diode (LED) or a light emitter such as an organic electroluminescence (EL) element and an inorganic EL element. The backlight 19 may have any structure that allows control of the light intensity and the light intensity distribution.

The display 20 includes a display panel. The display 20 may be, for example, a liquid-crystal device such as a liquid-crystal display (LCD). In the present embodiment, the display 20 includes a transmissive liquid-crystal display panel. The display 20 is not limited to this example and may be any of various display panels.

The display 20 includes multiple pixels and controls the transmittance of light from the backlight 19 incident on each pixel to emit image light reaching the eyes 5 of the driver 13. The driver 13 views an image formed with the image light emitted from each pixel in the display 20.

The barrier 21 defines the traveling direction of incident light. In the example of FIG. 3, with the barrier 21 being nearer the backlight 19 than the display 20, the light emitted from the backlight 19 enters the barrier 21, and further enters the display 20. In this case, the barrier 21 blocks or attenuates a part of light emitted from the backlight 19 and transmits another of the light to the display 20. The display 20 emits incident light traveling in a direction defined by the barrier 21 as image light traveling in the same direction. With the display 20 being nearer the backlight 19 than the barrier 21, the light emitted from the backlight 19 enters the display 20, and further enters the barrier 21. In this case, the barrier 21 blocks or attenuates a part of image light emitted from the display 20 and transmits another part of the image light toward the eyes 5 of the driver 13.

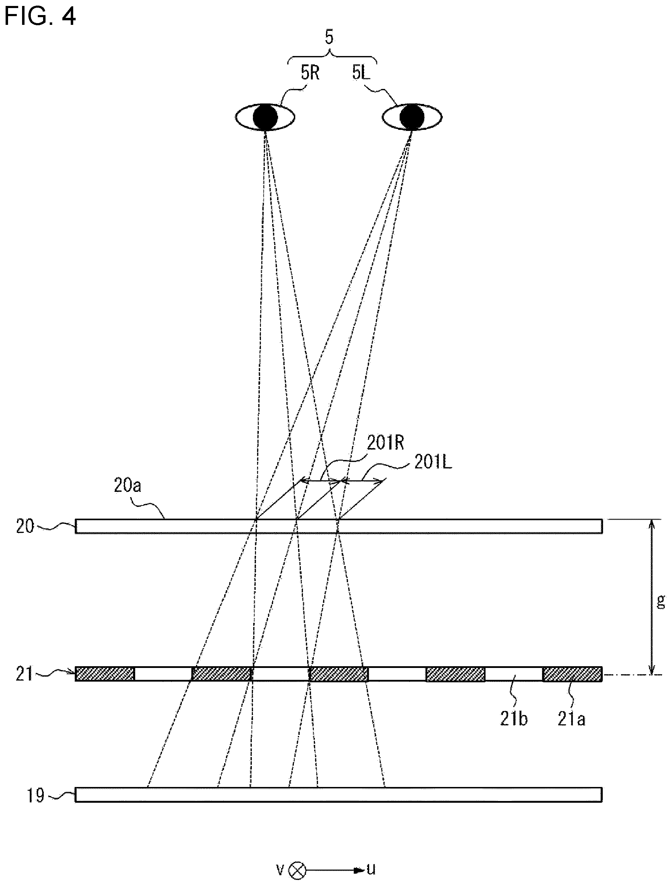

Irrespective of whether the display 20 or the barrier 21 is nearer the driver 13, the barrier 21 controls the traveling direction of image light. The barrier 21 allows a part of image light emitted from the display 20 to reach either the left eye 5L or the right eye 5R (refer to FIG. 4) of the driver 13, and to allow another part of the image light to reach the other of the left eye 5L or the right eye 5R of the driver 13. In other words, the barrier 21 directs at least a part of image light toward the left eye 5L of the driver 13 and toward the right eye 5R of the driver 13. The left eye 5L is also referred to as a first eye, and the right eye 5R as a second eye. In the present embodiment, the barrier 21 is located between the backlight 19 and the display 20. In other words, light emitted from the backlight 19 first enters the barrier 21 and then enters the display 20.

The barrier 21 defines the traveling direction of image light to allow each of the left eye 5L and the right eye 5R of the driver 13 to receive different image light. Each of the left eye 5L and the right eye 5R of the driver 13 can thus view a different image.

As illustrated in FIG. 4, the display 20 includes, on the display surface 20a, left-eye viewing areas 201L viewable by the left eye 5L of the driver 13 and right-eye viewing areas 201R viewable by the right eye 5R of the driver 13. The display 20 displays a parallax image including left-eye images viewable by the left eye 5L of the driver 13 and right-eye images viewable by the right eye 5R of the driver 13. A parallax image refers to an image projected to the left eye 5L and the right eye 5R of the driver 13 to generate parallax between the two eyes of the driver 13. The display 20 displays left-eye images on the left-eye viewing areas 201L and right-eye images on the right-eye viewing areas 201R. In other words, the display 20 displays a parallax image on the left-eye viewing areas 201L and the right-eye viewing areas 201R. The left-eye viewing areas 201L and the right-eye viewing areas 201R are arranged in u-direction indicating a parallax direction. The left-eye viewing areas 201L and the right-eye viewing areas 201R may extend in v-direction orthogonal to the parallax direction, or in a direction inclined with respect to v-direction at a predetermined angle. In other words, the left-eye viewing areas 201L and the right-eye viewing areas 201R may be arranged alternately in a predetermined direction including a component in the parallax direction. The pitch between the alternately arranged left-eye viewing areas 201L and right-eye viewing areas 201R is also referred to as a parallax image pitch. The left-eye viewing areas 201L and the right-eye viewing areas 201R may be spaced from each other or adjacent to each other. The display 20 may further include a display area on the display surface 20a for displaying a planar image. A planar image is an image that generates no parallax between the eyes 5 of the driver 13 and is not viewed stereoscopically.

As illustrated in FIG. 4, the barrier 21 includes open areas 21b and light-blocking surfaces 21a. With the barrier 21 nearer the driver 13 than the display 20 on the optical path of image light, the barrier 21 controls the transmittance of image light emitted from the display 20. The open areas 21b transmit light entering the barrier 21 from the display 20. The open areas 21b may transmit light with a transmittance of a first predetermined value or greater. The first predetermined value may be, for example, 100% or a value close to 100%. The light-blocking surfaces 21a block light entering the barrier 21 from the display 20. The light-blocking surfaces 21a may transmit light with a transmittance of a second predetermined value or less. The second predetermined value may be, for example, 0% or a value close to 0%. The first predetermined value is greater than the second predetermined value.

The open areas 21b and the light-blocking surfaces 21a are arranged alternately in u-direction indicating the parallax direction. The boundaries between the open areas 21b and the light-blocking surfaces 21a may extend in v-direction orthogonal to the parallax direction as illustrated in FIG. 4, or in a direction inclined with respect to v-direction at a predetermined angle. In other words, the open areas 21b and the light-blocking surfaces 21a may be arranged alternately in a predetermined direction including a component in the parallax direction.

In the present embodiment, the barrier 21 is more away from the driver 13 than the display 20 on the optical path of image light. The barrier 21 controls the transmittance of light directed from the backlight 19 to the display 20. The open areas 21b transmit light directed from the backlight 19 to the display 20. The light-blocking surfaces 21a block light directed from the backlight 19 to the display 20. This structure allows light entering the display 20 to travel in a predetermined direction. Thus, the barrier 21 can control a part of image light to reach the left eye 5L of the driver 13, and another part of the image light to reach the right eye 5R of the driver 13.

The barrier 21 may include a liquid crystal shutter. The liquid crystal shutter can control the transmittance of light in accordance with a voltage applied. The liquid crystal shutter may include multiple pixels and control the transmittance of light for each pixel. The liquid crystal shutter can form an area with high light transmittance or an area with low light transmittance in an intended shape. The open areas 21b in the barrier 21 including the liquid crystal shutter may have a transmittance of the first predetermined value or greater. The light-blocking surfaces 21a in the barrier 21 including the liquid crystal shutter may have a transmittance of the second predetermined value or smaller. The first predetermined value may be greater than the second predetermined value. The ratio of the second predetermined value to the first predetermined value may be set to 1/100 in one example. The ratio of the second predetermined value to the first predetermined value may be set to 1/1000 in another example. The barrier 21 including the open areas 21b and the light-blocking surfaces 21a that can shift is also referred to as an active barrier.

The controller 24 controls the display 20. When the barrier 21 is an active barrier, the controller 24 may control the barrier 21. The controller 24 may control the backlight 19. The controller 24 obtains coordinate information about the pupil positions of the eyes 5 of the driver 13 from the detection device 50, and controls the display 20 based on the coordinate information. The controller 24 may control at least one of the barrier 21 or the backlight 19 based on the coordinate information. The controller 24 may receive an image output from the camera 11 and detect the eyes 5 of the driver 13 based on the received image. In other words, the controller 24 may have the same function as and may serve as the detector 15. The controller 24 may control the display 20 based on the detected pupil positions of the eyes 5. The controller 24 can control at least one of the barrier 21 or the backlight 19 based on the detected pupil positions of the eyes 5. The controller 24 and the detector 15 may be, for example, processors. The controller 24 and the detector 15 may each include one or more processors. The processors may include a general-purpose processor that reads a specific program to perform a specific function, and a processor dedicated to specific processing. The dedicated processor may include an application-specific integrated circuit (ASIC). The processors may include a programmable logic device (PLD). The PLD may include a field-programmable gate array (FPGA). The controller 24 and the detector 15 may each be a system-on-a-chip (SoC) or a system in a package (SiP) in which one or more processors cooperate with other components.

The communicator 22 may include an interface that can communicate with an external device. The external device may include, for example, the detection device 50. The external device may provide, for example, image information to be displayed on the display 20. The communicator 22 may obtain various sets of information from the external device such as the detection device 50 and output the information to the controller 24. The interface that can perform communication in one or more embodiments of the present disclosure may include, for example, a physical connector and a wireless communication device. The physical connector may include an electric connector for transmission with electric signals, an optical connector for transmission with optical signals, and an electromagnetic connector for transmission with electromagnetic waves. The electric connector may include a connector complying with IEC 60603, a connector complying with the universal serial bus (USB) standard, and a connector used for an RCA terminal. The electric connector may include a connector used for an S terminal specified by EIAJ CP-121aA or a connector used for a D terminal specified by EIAJ RC-5237. The electric connector may include a connector complying with the High-Definition Multimedia Interface (HDMI, registered trademark) standard or a connector used for a coaxial cable including a British Naval Connector, also known as, for example, a Baby-series N Connector (BNC). The optical connector may include a connector complying with IEC 61754. The wireless communication device may include a wireless communication device complying with the Bluetooth (registered trademark) standard and a wireless communication device complying with other standards including IEEE 8021a. The wireless communication device includes at least one antenna.

The storage 23 may store various sets of information or programs for causing the components of the 3D display device 17 to operate. The storage 23 may include, for example, a semiconductor memory. The storage 23 may function as a work memory for the controller 24. The controller 24 may include the storage 23.

As illustrated in FIG. 4, light emitted from the backlight 19 passes through the barrier 21 and the display 20 to reach the eyes 5 of the driver 13. The broken lines indicate the paths traveled by light from the backlight 19 to reach the eyes 5. The light through the open areas 21b in the barrier 21 to reach the right eye 5R passes through the right-eye viewing areas 201R in the display 20. In other words, light through the open areas 21b allows the right eye 5R to view the right-eye viewing areas 201R. The light through the open areas 21b in the barrier 21 to reach the left eye 5L passes through the left-eye viewing areas 201L in the display 20. In other words, light through the open areas 21b allows the left eye 5L to view the left-eye viewing areas 201L.

The display 20 displays left-eye images on the left-eye viewing areas 201L and right-eye images on the right-eye viewing areas 201R. Thus, the barrier 21 allows image light for the left-eye images to reach the left eye 5L and image light for the right-eye images to reach the right eye 5R. More specifically, the open areas 21b allow image light for the left-eye images to reach the left eye 5L of the driver 13 and image light for the right-eye images to reach the right eye 5R of the driver 13. The 3D display device 17 with this structure can project a parallax image to the two eyes of the driver 13. The driver 13 views the parallax image with the left eye 5L and the right eye 5R to view the image stereoscopically.

Light through the open areas 21b in the barrier 21 is emitted through the display surface 20a of the display 20 as image light and reaches the windshield 25 through the optical element 18. The image light is reflected from the windshield 25 and reaches the eyes 5 of the driver 13. This allows the eyes 5 of the driver 13 to view a second virtual image 14b located more away in the negative z-direction than the windshield 25. The second virtual image 14b corresponds to an image appearing on the display surface 20a. The open areas 21b and the light-blocking surfaces 21a in the barrier 21 form a first virtual image 14a in front of the windshield 25 and more away in the negative z-direction than the second virtual image 14b. As illustrated in FIG. 1, the driver 13 can view an image with the display 20 appearing to be at the position of the second virtual image 14b and the barrier 21 appearing to be at the position of the first virtual image 14a.

The 3D display device 17 emits image light for the image appearing on the display surface 20a in a direction defined by the barrier 21. The optical element 18 allows the image light to travel toward the windshield 25. The optical element 18 can reflect or refract the image light. The windshield 25 reflects the image light and directs the light toward the eyes 5 of the driver 13. The image light entering the eyes 5 of the driver 13 causes the driver 13 to view a parallax image as the virtual image 14. The driver 13 views the virtual image 14 stereoscopically. An image of the virtual image 14 corresponding to the parallax image is also referred to as a parallax virtual image. A parallax virtual image is a parallax image projected through the optical system. An image of the virtual image 14 corresponding to the planar image is also referred to as a planar virtual image. A planar virtual image is a planar image projected through the optical system.

The detector 15 may use the entire range of the captured image 51 as a search range in template matching. The detector 15 may use a part of the captured image 51 as the search range in template matching. Apart of the search range may include the face of the driver 13 in the captured image 51. Before starting the search with the template image 52, the detector 15 detects the face of the driver 13 in the captured image 51 captured with the camera 11 and defines a search range with a predetermined size (smaller than the entire range of the captured image 51) including the detected face. The detector 15 may perform template matching by searching the defined search range with the template image 52. The search range with the template image 52 is smaller than the entire range of the captured image 51. Thus, the template matching involves less computation. With such less computation, the detector 15 can output a detection result from template matching at a higher computation speed.

The detector 15 generates the template image 52 based on the captured image 51 captured with the camera before starting the search. The detector 15 may perform pupil detection in the captured image 51 and use the predetermined peripheral area including the detected pupils as the template image 52. The predetermined peripheral area to be generated as the template image 52 may be, for example, an area corresponding to the eye box 16 in the 3D projector 12.

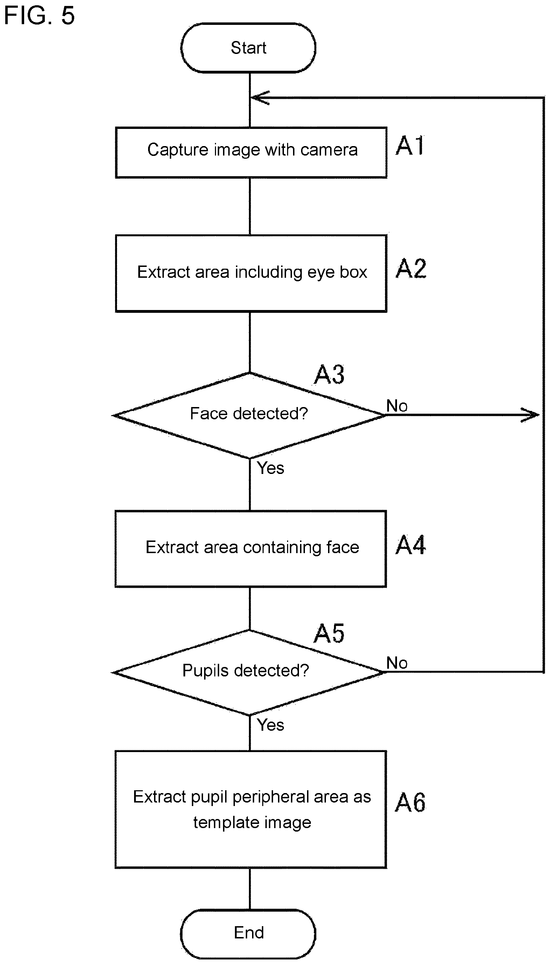

The template image generation process will now be described with reference to a flowchart. The detection device 50 may perform, for example, the template image generation process in the flowchart of FIG. 5. The detection device 50 may start the template image generation process when, for example, the 3D projection system 100 is activated (powered on). In step A1, the camera 11 first captures an image to obtain a captured image 51 and outputs the image to the detector 15. The captured image 51 captured with the camera 11 includes, for example, the face of the driver 13 seated in a seat in the movable body 10. In subsequent step A2, the detector 15 extracts a first area including the eye box 16 from the captured image 51. In step A3, the detector 15 performs face detection on the extracted first area to determine whether the face of the driver is detected. In response to the face being detected, the processing advances to step A4. In response to no face being detected, the processing returns to step A1, in which an image is captured again with the camera 11.

In step A4, the detector 15 extracts a second area containing the detected face from the first area. In step A5, the detector 15 performs pupil detection on the second area to determine whether pupils are detected. In response to the pupils being detected, the processing advances to step A6. In response to no pupil being detected, the processing returns to step A1, in which an image is captured again with the camera 11. In step A6, the detector 15 extracts a pupil peripheral area including the detected pupils as a template image 52. The template image generation process ends. The detector 15 may store the extracted template image 52, for example, into a storage area included in the detector 15 or into the storage 23. The detector 15 may extract, for example, a pupil peripheral area with the same size as the eye box 16 as the template image 52. The detector 15 may also store the relative coordinate positional relationship between each representative position and the corresponding pupil positions on the template image 52, together with the template image 52.

The template image 52 may be temporarily stored into the storage area in the detector 15 while the 3D projection system 100 is activated. The template image 52 may be, for example, associated with the imaged driver 13 and stored into the storage 23. The template image 52 stored in the storage 23 can be subsequently read from the storage 23 by the detector 15 at, for example, subsequent activation of the 3D projection system 100. This eliminates the template image generation process. The detector 15 can perform the template image generation process again to update (rewrite) the template image 52 stored in the storage 23.

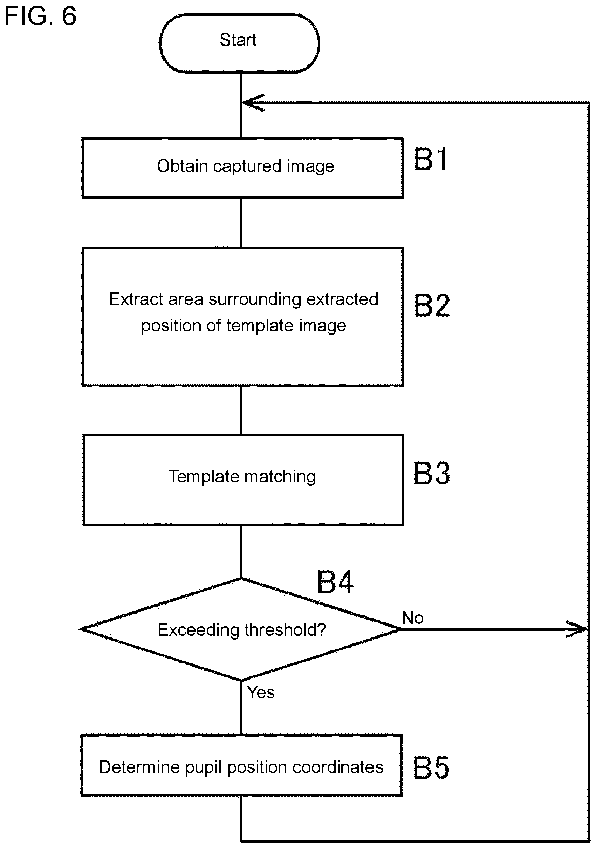

The template matching process will be described with reference to a flowchart. The detection device 50 may perform, for example, the template matching process in the flowchart of FIG. 6. The detection device 50 may perform, for example, the template image generation process in response to activation of the 3D projection system 100, and start the template matching process after the template image generation process ends. Using the template image 52 prestored in the storage 23, the detection device 50 may start the template matching process in response to activation of the 3D projection system 100.

In step B1, the detector 15 first obtains the captured image 51 from the camera 11. In step B2, the detector 15 extracts the area surrounding the position at which the template image 52 is extracted from the captured image 51 as a search range. The coordinates of the position at which the template image 52 is extracted may be associated with the template image 52 and be stored. In step B3, the detector 15 performs template matching for the search range using the template image 52. The detector 15 determines a position with the highest degree of matching with the template image 52 within the search range and the degree of matching by template matching. In step B4, the detector 15 determines whether the determined degree of matching is greater than or equal to a threshold. When the value is greater than or equal to the threshold, the processing advances to step B5. When the value is less than the threshold, the processing returns to step B1 and performs imaging with the camera 11 again. In step B5, the detector 15 determines the coordinates of the pupil positions in the captured image 51 based on the coordinates of the position with the highest degree of matching with the template image 52 within the search range and the predefined relative coordinate positional relationship, and ends the template matching process. The coordinate information about the determined pupil positions is output from the detection device 50 to the 3D projector 12. In the 3D projector 12, the controller 24 controls the parallax image displayed on the display 20 based on the coordinate information about the pupil positions obtained from the detection device 50.

The driver's seat of the movable body 10 is, for example, movable in the front-rear direction. The posture of the driver 13 may also change during the operation of the movable body 10. The front or rear position of the driver's seat or the posture of the driver 13 may change. The face of the driver 13 may then move in z-direction. When the face of the driver 13 moves in the positive z-direction, the face of the driver 13 is captured to be smaller in the captured image 51 than before the movement. When the face of the driver 13 moves in the negative z-direction, the face of the driver 13 is captured to be larger in the captured image 51 than before the movement. In this case, the template image 52 is to undergo a scaling process, and then template matching is to be performed using the resultant template image 52. For example, multiple template images 52 with different enlargement factors may be used in template matching. For example, multiple template images 52 with different reduction factors may be used in template matching.

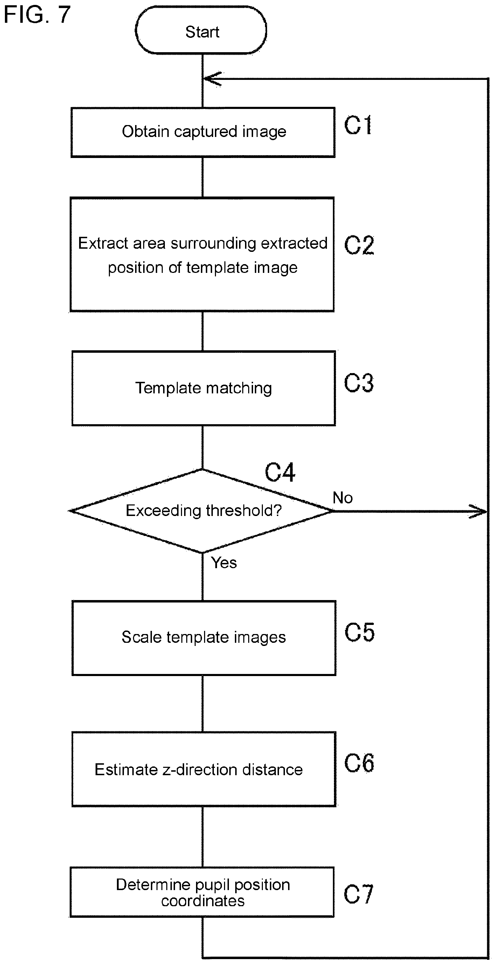

The template matching processes in another example will be described with reference to a flowchart. The detection device 50 may perform, for example, a template matching process in the flowchart of FIG. 7. The detection device 50 may perform, for example, the template image generation process in response to activation of the 3D projection system 100, and start the template matching process after the template image generation process ends. Using the template image 52 prestored in the storage 23, the detection device 50 may start the template matching process in response to activation of the 3D projection system 100.

The processing in steps B1 to B4 in FIG. 6 is the same as the processing in steps C1 to C4 in FIG. 7 and will not be described repeatedly. In step C5, the detector 15 performs a scaling process on the template images using multiple scaling factors for the template images 52. The detector 15 performs template matching using each template image 52 resulting from the scaling process. The detection device 50 does not detect directions of changes in the posture of the driver 13, and performs both enlargement and reduction processes as the scaling process. With multiple template images 52 generated through the scaling process, the detector 15 performs template matching using the multiple template images 52 to determine the template image 52 with the highest degree of matching. In step C6, the detector 15 estimates the position of the driver in z-direction based on the scaling factor of the template image 52 with the highest degree of matching. In step C7, after determining the coordinates of the pupil positions in the captured image 51 in the same or similar manner to step B5, the pupil position coordinates are corrected based on the estimated position in z-direction, and the template matching process ends. The coordinate information about the determined pupil positions is output from the detection device 50 to the 3D projector 12.

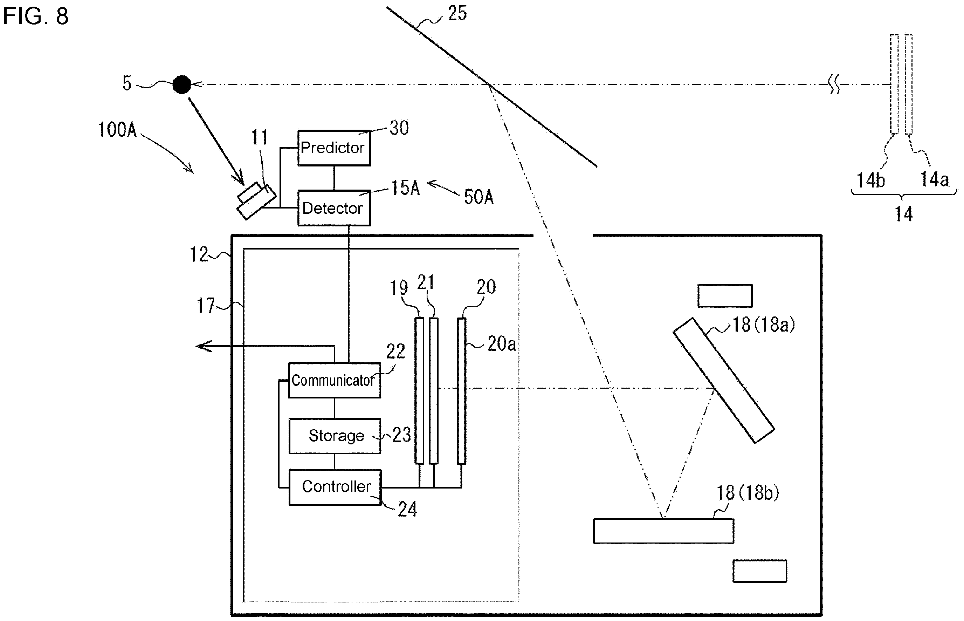

A 3D projection system 100A in another example will be described. In the 3D projection system 100A, as illustrated in FIG. 8, a detection device 50Aincludes a camera 11, a detector 15A, and a predictor 30. The components of the 3D projection system 100A are the same as or similar to the components of the 3D projection system 100 described above except the detection device 50A. The components of the 3D projection system 100A are thus denoted with the same reference numerals as the corresponding components and will not be described in detail. The predictor 30 predicts the positions of the eyes 5 at a time later than the current time based on multiple positions of the eyes 5 detected by the detector 15. The positions of the eyes 5 in the present embodiment may also be coordinate information indicating the pupil positions of the eyes 5 of the driver 13 as described above. The multiple positions of the eyes 5 include the positions of the eyes 5 at different detection times. The predictor 30 may predict future positions of the eyes 5 using multiple sets of data about detection time and coordinate information, and output the future positions as predicted positions. When detecting the positions of the eyes 5, the detector 15Amay store coordinate information and detection time as data for prediction, for example, into the storage area in the detector 15, the storage area in the predictor 30, or the storage 23 sequentially. The future positions of the eyes 5 refer to the positions in the future with respect to the multiple sets of data stored for prediction.

The method of predicting the positions of the eyes 5 used by the predictor 30 may use, for example, a prediction function. The prediction function is derived from multiple sets of data stored for prediction. The prediction function uses a function formula with coefficients determined in advance by experiment or other means. The prediction function may be stored in the storage area in the detector 15A, the storage area in the predictor 30, or the storage 23. The prediction function may be updated every time when the predictor 30 predicts the positions of the eyes 5.

The predictor 30 inputs the future time to be predicted into the prediction function and outputs the coordinate information about the positions of the eyes 5 (predicted positions) at the time. The future time to be predicted is the time at which the next template matching is to be performed. This may be, for example, the time when the next frame is input from the camera 11. As described above, the detector 15A may search a part of the captured image 51 as a search range in template matching. The detector 15A may search an area including the positions of the eyes 5 predicted by the predictor 30 defined as a search range in template matching. The detector 15A defines an area including the predicted positions output by the predictor 30 as a prediction area in the captured image 51, and defines the prediction range as a search range in template matching. The prediction range including the predicted positions may be smaller than the captured image 51 and larger than the template image 52, and may contain the predicted positions within the area. For example, the prediction range may be an area in which the center coordinates of the prediction range match the coordinates of the predicted positions. The shape and size of the search range in template matching in the present embodiment may have, for example, similarity to the template image.

The detector 15A performs template matching in such an area as the search range. The template matching in the present embodiment is the same as or similar to the template matching described above except the search range. In the template matching, a position with the highest degree of matching with the template image 52 is searched in the prediction range as the search range. The detection result may be the coordinate information indicating the pupil positions of the eyes 5 of the driver 13. The prediction area as the search range in the present embodiment includes the predicted positions output from the predictor 30. The pupil positions of the eyes 5 are thus highly likely to be included in the search range after the search range is set smaller. With the smaller search range, the template matching involves less computation. With such less computation, the detector 15A can output a detection result from template matching at a higher computation speed.

The predictor 30 may further calculate the change rate of the positions of the eyes 5 based on the multiple positions of the eyes 5 detected by the detector 15A. As described above, sets of coordinate information and detection time are stored as prediction data. Multiple sets of prediction data are used to calculate the change rate of the positions of the eyes 5. For example, the traveling distance from the positions of the eyes 5 can be calculated based on the difference between two sets of prediction data using the coordinate information. The time can be calculated from the detection time. The change rate of the positions of the eyes 5 can thus be calculated. The components in x- and y-directions can be calculated based on the traveling distance and the change rate of the positions of the eyes 5.

The detector 15A adjusts the size of the search range in template matching in accordance with the change rate calculated by the predictor 30. When the change rate calculated by the predictor 30 is large, the moving distance of the positions of the eyes 5 can be predicted to be large. When, for example, the component of the calculated change rate in x-direction is compared with the component of the calculated change rate in y-direction, the traveling distance from the positions of the eyes 5 is estimated to be greater in the direction of the larger component of the change rate. In the present embodiment, the search range in template matching can be defined as a small area by predicting the positions of the eyes 5. However, in the direction in which the component of the change rate is large, the positions of the eyes 5 may deviate from the predicted positions, and fall outside the search range. To prevent the positions of the eyes 5 from being outside the search range, for example, the detector 15Amay widen the area including the predicted positions in the direction of a larger component of the change rate. The detector 15A performs template matching in this widened area as the search range.

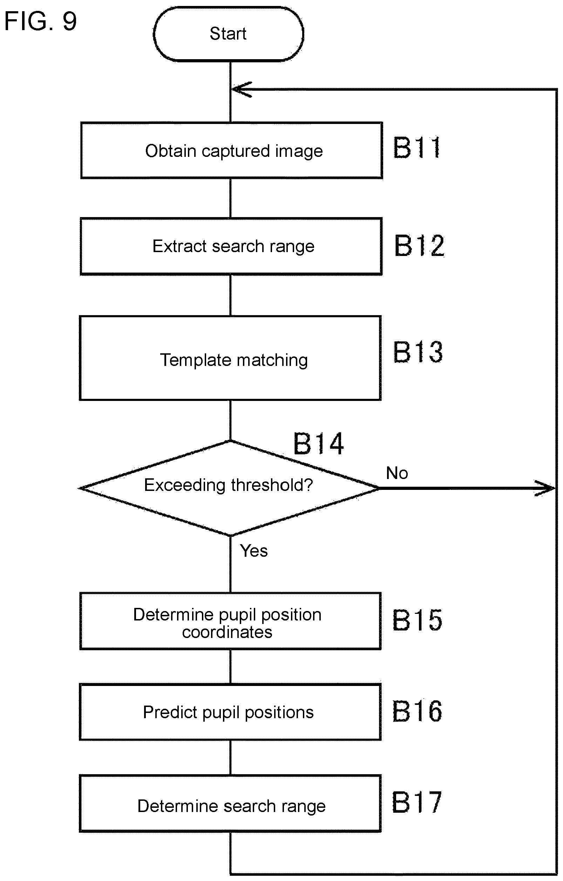

The template matching process including pupil position prediction will be described with reference to a flowchart. The detection device 50Amay perform, for example, the template matching process in the flowchart of FIG. 9. The detection device 50Amay perform, for example, the template image generation process in response to activation of the 3D projection system 100A, and start the template matching process after the template image generation process ends. Using the template image 52 prestored in the storage 23, the detection device 50A may start the template matching process in response to activation of the 3D projection system 100A.

In step B 11, the detector 15A first obtains the captured image 51 from the camera 11. In step B12, the detector 15A extracts the search range from the captured image 51. The search range extracted in step B12 is the search range determined in step B17 (described later). When the processing in step B17 is yet to be performed and the search range is not predetermined, the area surrounding the position at which the template image 52 is extracted may be used as the search range. In step B13, the detector 15A performs template matching in the search range using the template image 52. The detector 15A determines a position with the highest degree of matching with the template image 52 within the search range and its degree of matching by template matching. In step B 14, the detector 15A determines whether the determined degree of matching is greater than or equal to the threshold. When the value is greater than or equal to the threshold, the processing advances to step B15. When the value is less than the threshold, the processing returns to step B1 and performs imaging with the camera 11 again. In step B 15, the detector 15A determines the coordinates of the pupil positions in the captured image 51 based on the coordinates of the position with the highest degree of matching with the template image 52 within the search range and the predefined relative coordinate positional relationship. The coordinate information about the determined pupil positions is output from the detection device 50 to the 3D projector 12. In the 3D projector 12, the controller 24 controls the parallax image displayed on the display 20 based on the coordinate information about the pupil positions obtained from the detection device 50.

In step B16, the predictor 30 predicts future pupil positions and outputs the positions as predicted positions. The predictor 30 updates the prediction function based on, for example, the latest data for prediction, which is a set of coordinate information about the pupil positions determined in step B15 and the detection time, and the past data stored for prediction. The predictor 30 predicts the pupil positions using the updated prediction function and outputs the predicted positions. In step B17, the detector 15A determines the area including the predicted positions output from the predictor 30 as the search range. The processing returns to step B11.

As described above, the face of the driver 13 may move back and forth. When, for example, the driver 13 tilts the head, the face of the driver 13 may tilt. As the face of the driver 13 moves back and forth, the face of the driver 13 in the captured image 51 appears larger or smaller, similarly to when the image is processed for enlargement or reduction. When the face of the driver 13 is tilted, the face of the driver 13 in the captured image is similar to that in the rotation process. After the predictor 30 predicts the pupil positions, the detector 15A compares the predicted positions with the latest pupil positions. When the comparison result indicates that, for example, the interocular distance has changed, the detector 15A updates the template image 52 to a template image 52 with a scaling factor corresponding to the interocular distance. The detector 15A may, for example, pre-generate multiple template images 52 with different enlargement factors and multiple template images 52 with different reduction factors through the scaling process, and select the template image 52 corresponding to the interocular distance. With the predictor 30 predicting the pupil position of the left eye and the pupil position of the right eye, the detector 15A may detect the change in the interocular distance by comparing the latest pupil position of the left eye and the latest pupil position of the right eye.

When the pupil positions are tilted as a result of the detector 15A comparing the predicted positions with the latest pupil positions, the detector 15A updates the template image 52 to a template image 52 with a rotation angle corresponding to the tilt change. The detector 15Amay pre-generate, for example, multiple template images 52 with different rotation angles through the rotation process, and select the template image 52 corresponding to the tilt change. With the predictor 30 predicting the pupil position of the left eye and the pupil position of the right eye, the detector 15A may detect the tilt change from the change in the position in y-direction by comparing the latest pupil position of the left eye and the latest pupil position of the right eye. When the face of the driver 13 is tilted, the respective pupil positions in y-direction (y-coordinates) of the left and right eyes change in different directions. For example, the pupil position in y-direction of the left eye changing upward and the pupil position in y-direction of the right eye changing downward correspond to a tilt change. The detector 15A may calculate the rotation angle based on the magnitude of the position change of the left and right eyes in y-direction.

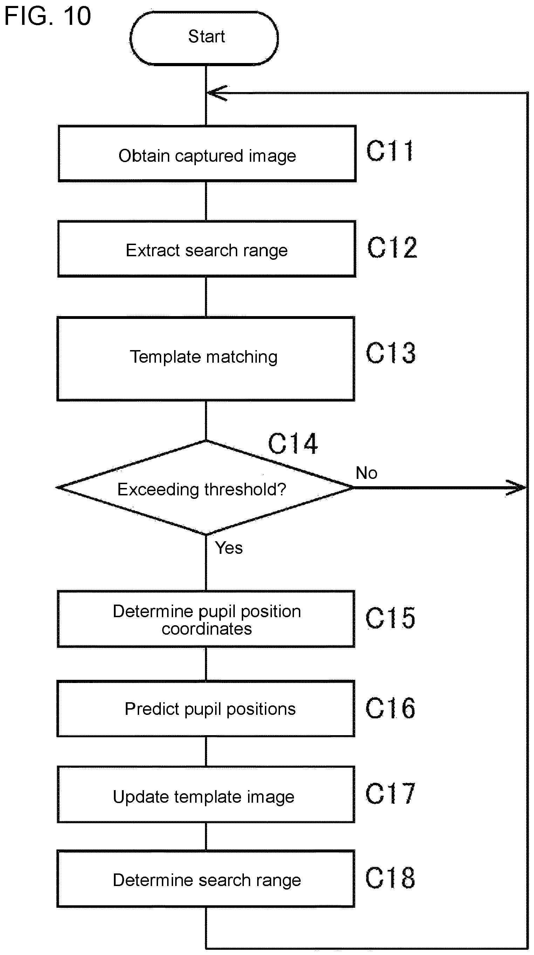

The template matching process including updating the template image will be described with reference to a flowchart. The detection device 50Amay perform, for example, the template matching process in the flowchart of FIG. 10. In step C11, the detector 15A first obtains the captured image 51 from the camera 11. In step C12, the detector 15A extracts the search range from the captured image 51. The search range extracted in step C12 is the search range determined in step C18 (described later). When the processing in step C18 is yet to be performed and the search range is not predetermined, the area surrounding the position at which the template image 52 is extracted may be used as the search range. In step C13, the detector 15A performs template matching in the search range using the updated template image 52. The template image 52 is the template image 52 updated in step C17 (described later). The detector 15A determines a position with the highest degree of matching with the template image 52 within the search range and its degree of matching by template matching. In step C14, the detector 15A determines whether the determined degree of matching is greater than or equal to the threshold. When the value is greater than or equal to the threshold, the processing advances to step C15. When the value is less than the threshold, the processing returns to step C11 and performs imaging with the camera 11 again. In step C15, the detector 15A determines the coordinates of the pupil positions in the captured image 51 based on the coordinates of the position with the highest degree of matching with the template image 52 within the search range and the predefined relative coordinate positional relationship. The coordinate information about the determined pupil positions is output from the detection device 50 to the 3D projector 12. In the 3D projector 12, the controller 24 controls the parallax image displayed on the display 20 based on the coordinate information about the pupil positions obtained from the detection device 50.

In step C16, the predictor 30 predicts future pupil positions and outputs the position as predicted positions. In step C17, the detector 15A updates the template image 52. The detector 15A compares the predicted positions with the latest pupil positions and updates the template image 52 to a template image 52 that has at least undergone the scaling process or the rotation process in accordance with the comparison result. In step C18, the detector 15A determines the area including the predicted positions output from the predictor 30 as the search range. The processing returns to step C11.

In the present disclosure, the structure is not limited to the structure described in the above embodiments, but may be varied or altered. For example, the functions of the components are reconfigurable unless any contradiction arises. Multiple components may be combined into a single unit, or a single component may be divided into separate units.

The figures illustrating the configurations according to the present disclosure are schematic. The figures are not drawn to scale relative to the actual size of each component.

In the present disclosure, the first, the second, or others are identifiers for distinguishing the components. The identifiers of the components distinguished with the first, the second, and others in the present disclosure are interchangeable. For example, the first eye can be interchangeable with the second eye. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the order of components or to suggest the existence of smaller or larger number identifiers.

In the present disclosure, x-axis, y-axis, and z-axis are used for ease of explanation and may be interchangeable with one another. The orthogonal coordinate system including x-axis, y-axis, and z-axis is used to describe the structures according to the present disclosure. The positional relationship between the components in the present disclosure is not limited to being orthogonal.

The present disclosure may be implemented in the following forms.

In one embodiment of the present disclosure, a detection device includes a camera and a detector. The camera captures an image of a human face. The detector detects a position of a human eye based on the captured image output from the camera by template matching.

In one embodiment of the present disclosure, an image display system includes a display, a barrier, a camera, a detector, and a controller. The display displays a parallax image to be projected to two human eyes through an optical system. The barrier defines a traveling direction of image light for the parallax image to generate parallax between the two human eyes. The camera captures an image of a human face. The detector detects positions of the two human eyes based on the captured image output from the camera by template matching. The controller controls the display based on the positions of the two human eyes detected by the detector.

The detection device and the image display system according to one or more embodiments of the present disclosure allow processing involving less computation and successive detection.

The present disclosure may be embodied in various forms without departing from the spirit or the main features of the present disclosure. The embodiments described above are thus merely illustrative in all respects. The scope of the present disclosure is defined not by the description given above but by the claims. Any variations and alterations contained in the claims fall within the scope of the present disclosure.

### REFERENCE SIGNS

5 eye (5L: left eye, 5R: right eye)
10 movable body
11 camera
12 3D projector
13 driver
14 virtual image (14a: first virtual image, 14b: second virtual image)
15, 15A detector
16 eye box
17 3D display device
18 optical element (18a: first mirror, 18b: second mirror)
19 backlight
20 display (20a: display surface)
201L left-eye viewing area
201R right-eye viewing area
21 barrier (21a: light-blocking surface, 21b: open area)
22 communicator
23 storage
24 controller
25 windshield
30 predictor
50, 50A detection device
100, 100A 3D projection system (image display system)

## Claims

1. A detection device, comprising:
a camera configured to capture an image of a human face; and
a detector configured to detect a position of a human eye based on the captured image output from the camera by template matching.

2. The detection device according to claim 1, wherein
the detector detects a human face based on the captured image, and defines an area including the human face as a search range in the template matching.

3. The detection device according to claim 1, further comprising:
a predictor configured to predict, based on a plurality of positions of an eye detected by the detector, a position of the eye at a time later than a current time,
wherein the detector defines an area including the position of the eye predicted by the predictor as a search range in the template matching.

4. The detection device according to claim 3, wherein
the predictor calculates a change rate of the position of the eye based on the plurality of positions of the eye detected by the detector, and
the detector adjusts a size of the search range in the template matching to a size corresponding to the change rate calculated by the predictor.

5. The detection device according to claim 3 or claim 4, wherein
the detector uses, in the template matching, a plurality of template images processed through scaling.

6. The detection device according to any one of claims 3 to 5, wherein
the detector uses, in the template matching, a plurality of rotated template images.

7. The detection device according to any one of claims 1 to 6, wherein
the detector uses, in the template matching, a template image including a human eye or another part of a face with a determined relative positional relationship with the human eye.

8. The detection device according to claim 7, wherein
the detector generates the template image based on the captured image.

9. The detection device according to claim 7, further comprising:
a storage configured to store the template image pre-generated and associated with a user.

10. An image display system, comprising:
a display configured to display a parallax image to be projected to two human eyes through an optical system;
a barrier configured to define a traveling direction of image light for the parallax image to generate parallax between the two human eyes;
a camera configured to capture an image of a human face;
a detector configured to detect positions of the two human eyes based on the captured image output from the camera by template matching; and
a controller configured to control the display based on the positions of the two human eyes detected by the detector.

11. The image display system according to claim 10, wherein
the detector uses, in the template matching, an area corresponding to an eye box as a template image.
